# EUROPEAN PATENT APPLICATION

(11) **EP 2 725 543 A1**
(43) Date of publication of application: **30.04.2014**
(21) Application number: 11868237.6
(22) Date of filing: 30.06.2011
(51) Int. Cl.: G06Q 50/00

(54) **SYSTEM FOR CONVERTING GREENHOUSE GAS EMISSIONS TO CARBON CREDIT AND METHOD FOR SAME**

(30) Priority: 21.06.2011 KR 20110060014
(71) Applicant: Econuri Co., Ltd., Incheon 404-290 (KR); Na, Tae In, Incheon 404-792 (KR); Seo, Jong Hyuk, Goyang-si, Gyeonggido 410-360 (KR)
(72) Inventor: NA, Tae In, Incheon 404-792 (KR); SEO, Jong Hyuk, Goyang-si Gyeonggido 410-360 (KR); NA, Yun Bok, Incheon 404-792 (KR); SEO, Yong Gi, Goyang-si Gyeonggido 410-360 (KR)
(74) Representative: Kransell & Wennborg KB
(86) International application number: PCT/KR2011/004780
(87) International publication number: WO 2012/176949

(57) **Abstract**

The present invention relates to a system for converting greenhouse gas emissions to carbon credit and a method for same. The system for converting the greenhouse gas emissions to carbon credit includes a carbon emission reduction device which detects an amount of fuel filled in a vehicle and an amount of fuel used by the vehicle, minimizes the supply of fuel to the engine of the vehicle to prevent excessive fuel consumption and limit carbon emissions when the vehicle does not move within a preset time. According to the present invention, a greenhouse gas reference emission amount for the vehicle may be reduced, and the greenhouse gas reduction amount for the vehicle may be converted into carbon credit that includes an economic value through the carbon emission reduction device so as to induce active participation by individuals for the reduction of greenhouse gas.

## Description

### Technical Field

The present invention relates to a system and method for converting greenhouse gas emissions into carbon credit, and more particularly, to technology for reducing the greenhouse gas emissions of vehicles and converting the greenhouse gas reductions of vehicles into carbon credit having an economic value using a carbon emission reduction device.

### Background Art

The Kyoto Protocol was adopted in December 1997 to address global warming and came into force in February 2005. The Kyoto Protocol, which is the International Convention for regulation and prevention of global warming, defined the emission reduction goals of six kinds of target gases including carbon dioxide, etc., which show greenhouse effects. Primarily, developed countries including the European Union and Japan accepted and mandatorily implemented a resolution that the reduction goals be accomplished from 2008 to 2012.

In the duty countries, surpluses and shortages of the reduction goals are made up for via carbon credit trading between countries to achieve the reduction goals, and thus the economic value for carbon credit is created and authorized.

Korea is classified as a developing country under the Kyoto Protocol and is a non-duty reduction country, but Korea, as an OECD member country, is asked to execute the international community's ongoing obligations to reduce greenhouse gas emissions. Korea published voluntary reduction goals as a non-duty country in the General Assembly in Copenhagen in December 2009 and submitted voluntary reduction goals to UN in January 2010.

Thus, Korea is considered to face the economic value resulting from the surpluses and shortages of carbon emissions after 2013, and studies and countermeasures to cope therewith are recognized as important management challenges for the country and companies.

However, rights and obligations are conferred only to the country and companies in terms of detailed procedures for reducing carbon emissions, and practical countermeasures able to reduce carbon emissions in daily lives of individuals have not yet been introduced.

### Disclosure

### Technical Problem

Accordingly, the present invention has been made keeping in mind the above problems occurring in the related art, and an object of the present invention is to provide a system and method for converting greenhouse gas emissions into carbon credit, wherein a carbon emission reduction device reduces the greenhouse gas emissions of vehicles, and converts the greenhouse gas reductions of vehicles into carbon credit having an economic value, thereby inducing active participation by individuals in reduction of greenhouse gases and contributing to solving global warming problems by not only engaging the country or companies but also individuals.

Another object of the present invention is to provide a system and method for converting greenhouse gas emissions into carbon credit, wherein an economic value for carbon credit produced via reduction of greenhouse gases of vehicles may be traded or transferred to or acquired from the country or companies, thus ensuring economic benefits of individuals and stable growth of companies.

### Technical Solution

In order to accomplish the above objects, the present invention provides a system for converting greenhouse gas emissions into carbon credit, comprising a carbon emission reduction device for detecting an amount of fuel fed into a vehicle and an amount of fuel used by the vehicle, minimizing supply of fuel to an engine of the vehicle to prevent fuel consumption due to idling and suppress carbon emission when the vehicle does not move within a preset time period, normalizing supply of fuel to the engine of the vehicle when the vehicle is moved depending on detection of an acceleration pedal of the vehicle, generating carbon dioxide reduction information by adding or subtracting an amount of carbon dioxide whose emission is suppressed during an idling prevention time period to or from an amount of carbon dioxide emitted from the vehicle, and converting the carbon dioxide reduction information into carbon credit which has an economic value generated upon reduction of 1 ton of carbon emissions.

In addition, the present invention provides a method of converting greenhouse gas emissions into carbon credit using the system as above, comprising (a) minimizing supply of fuel to an engine of a vehicle to prevent fuel consumption due to idling and suppress carbon emission when the vehicle does not move within a preset time period and normalizing supply of fuel to the engine of the vehicle when the vehicle is moved depending on detection of an acceleration pedal of the vehicle, by the carbon emission reduction device; (b) generating carbon dioxide reduction information by adding or subtracting an amount of carbon dioxide whose emission is suppressed for an idling prevention time period to or from an amount of carbon dioxide emitted from the vehicle, by the carbon emission reduction device; and (c) converting the carbon dioxide reduction information into carbon credit having an economic value generated upon reduction of 1 ton of carbon emissions, by the carbon emission reduction device.

### Advantageous Effects

According to the present invention as set forth, a carbon emission reduction device can reduce the greenhouse gas emissions of vehicles, and can convert the greenhouse gas reductions of vehicles into carbon credit having an economic value, thereby inducing active participation by individuals in reduction of greenhouse gases and contributing to solving global warming problems by not only engaging the country or companies but also individuals.

Also, according to the present invention, an economic value for carbon credit produced via reduction of greenhouse gases of vehicles can be traded or transferred to or acquired from the country or companies, thus ensuring economic benefits of individuals and stable growth of companies.

### Description of Drawings

FIG. 1 illustrates a system for converting greenhouse gas emissions into carbon credit according to the present invention;
FIG. 2 illustrates the relationship between elements of the system for converting greenhouse gas emissions into carbon credit according to the present invention;
FIG. 3 illustrates a carbon emission reduction device of the system for converting greenhouse gas emissions into carbon credit according to the present invention;
FIG. 4 illustrates a carbon credit management server of the system for converting greenhouse gas emissions into carbon credit according to the present invention;
FIG. 5 is a flowchart illustrating a process of converting greenhouse gas emissions into carbon credit according to the present invention;
FIG. 6 is a flowchart illustrating steps after S30 in the process of converting greenhouse gas emissions into carbon credit according to the present invention;
FIG. 7 is a flowchart specifically illustrating S10 in the process of converting greenhouse gas emissions into carbon credit according to the present invention; and
FIG. 8 is a flowchart specifically illustrating S30 in the process of converting greenhouse gas emissions into carbon credit according to the present invention.

### <Description of the Reference Numerals in the Drawings>

S: system for converting greenhouse gas emissions into carbon credit
100: carbon emission reduction device
110: fuel information management module
120: idling limitation module
130: carbon dioxide reduction calculation module
140: carbon credit conversion module
141: economic value information DB
150: carbon credit authentication module
160: carbon credit trading module
200: carbon credit management server
210: carbon credit management DB

### Best Mode

Specific features and advantages of the present invention will be more clearly understood from the following detailed description when taken in conjunction with the accompanying drawings. The terminologies or words used in the description and the claims of the present invention should be interpreted based on the meanings and concepts of the invention in keeping with the scope of the invention based on the principle that the inventors can appropriately define the terms in order to describe the invention in the best way. In the following description, it is to be noted that, when the functions of conventional elements and the detailed description of elements related with the present invention may make the gist of the present invention unclear, a detailed description thereof will be omitted.

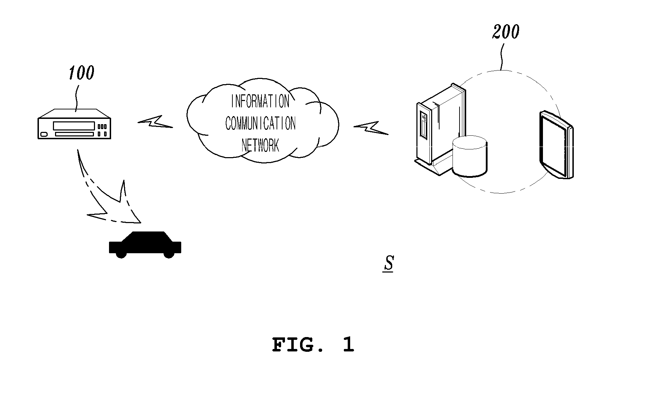

FIG. 1 illustrates a system for converting greenhouse gas emissions into carbon credit according to the present invention. As illustrated in this drawing, the system S for converting greenhouse gas emissions into carbon credit according to the present invention includes a carbon emission reduction device 100 and a carbon credit management server 200.

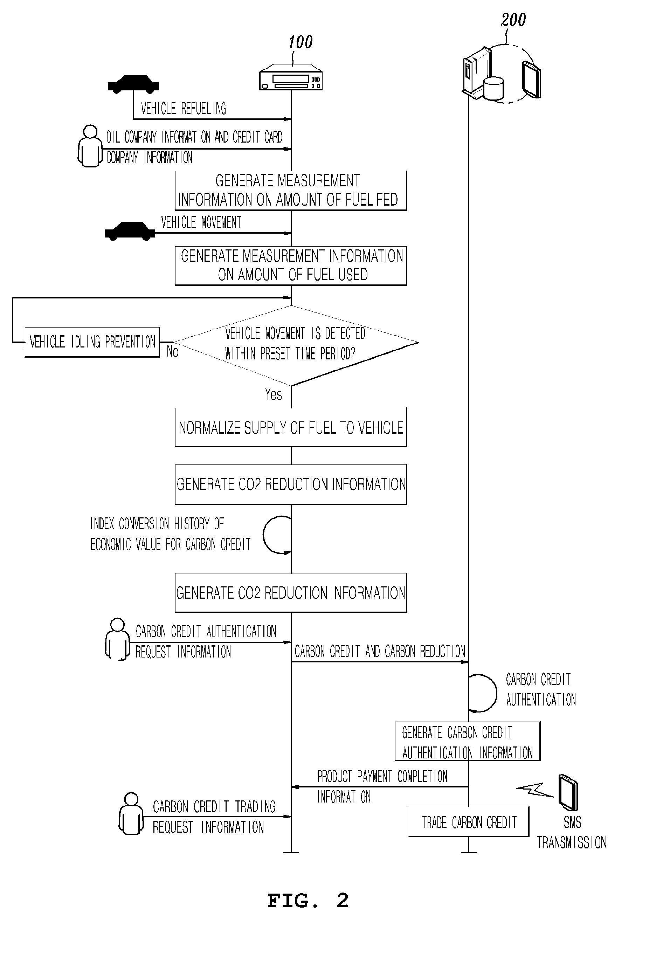

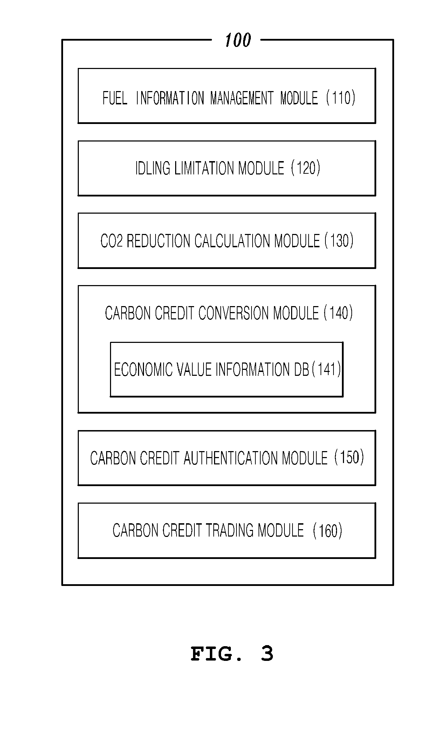

With reference to FIGS. 2 and 3, the carbon emission reduction device 100 of the system S for converting greenhouse gas emissions into carbon credit according to the present invention is described below.

The carbon emission reduction device 100 detects the amount of fuel fed into a vehicle and the amount of fuel used by the vehicle, minimizes the supply of fuel to the engine of the vehicle to prevent fuel consumption due to idling and suppress carbon emission when the vehicle does not move within a preset time period, normalizes the supply of fuel to the engine of the vehicle when the vehicle is moved depending on detection of the acceleration pedal of the vehicle, generates carbon dioxide reduction information by adding or subtracting the amount of carbon dioxide whose emission is suppressed during an idling prevention time period to or from the amount of carbon dioxide emitted from the vehicle, and converts the carbon dioxide reduction information into carbon credit which has an economic value generated upon reduction of 1 ton of carbon emissions. This device includes a fuel information management module 110, an idling limitation module 120, a carbon dioxide reduction calculation module 130, a carbon credit conversion module 140, a carbon credit authentication module 150 and a carbon credit trading module 160.

Specifically, the fuel information management module 110 of the carbon emission reduction device 100 detects the kind and amount of fuel fed into a vehicle to generate measurement information on an amount of fuel fed, detects the amount of fuel consumed by movement of the vehicle to generate measurement information on an amount of fuel used, and stores and manages such information.

The measurement information on the amount of fuel fed is preferably understood to include vehicle model data, fuel model data, vehicle travel time data, and data for an amount of fuel fed into the fuel storage space of a vehicle, but the present invention is not limited thereto.

Furthermore, the fuel information management module 110 receives preset oil company information and additional oil company information upon supply of fuel to a vehicle and stores and manages the information, and also receives preset credit card company information and additional credit card company information upon payment of fuel fed into the vehicle and stores and manages the information.

Meanwhile, the idling limitation module 120 minimizes the supply of fuel to the engine of a vehicle to prevent fuel consumption due to idling and suppress carbon emission when the vehicle does not move within a preset time period depending on the detection of the acceleration pedal of the vehicle, and normalizes the supply of fuel to the engine of the vehicle when the vehicle is moved depending on the detection of the acceleration pedal of the vehicle.

As such, it is preferably understood that minimizing the supply of fuel means that the fuel is supplied to the engine of the vehicle to the extent that startup is not stopped, and normalizing the supply of fuel means that the fuel is supplied to the engine of the vehicle in proportion to decompression of the acceleration pedal so as to enable the vehicle to travel.

The carbon dioxide reduction calculation module 130 generates carbon dioxide reduction information by adding or subtracting the amount of carbon dioxide whose emission is suppressed during an idling prevention time period by means of the idling limitation module 120 to or from the amount of carbon dioxide emitted from the vehicle.

The amount of carbon dioxide emitted from a vehicle is shown in Table 1 below as noticed by the Ministry of Environment, 2007.

**[Table 1]**

| Transportation | CO₂ Emission coefficient (kg/km) | CO₂ Emission reductions upon 1 km travel |
|---|---|---|
| Small vehicles (less than 1000 cc) | 0.168 | 1 × 0.168 = 0.168 |
| Medium vehicles (1000∼2000 cc) | 0.211 | 1 × 0.211 = 0.211 |
| Large vehicles (2000 cc or more) | 0.294 | 1 × 0.294 = 0.294 |
| Taxi | 0.200 | 1 × 0.200 = 0.200 |
| City Bus | 0.062 | 1 × 0.062 = 0.062 |
| Subway | 0.017 | 1 × 0.017 = 0.017 |

As an embodiment of the carbon dioxide reduction calculation module 130, the carbon dioxide reduction calculation module 130 may calculate the amount of carbon dioxide which is substantially reduced from the CO₂ emission coefficient of Table 1 by adding or subtracting the amount of carbon dioxide whose emission is suppressed during the idling prevention time period to or from the amount of carbon dioxide emitted from the vehicle per 1 km.

The carbon credit conversion module 140 reads out carbon emission reductions included in the carbon dioxide reduction information authorized from the carbon dioxide reduction calculation module 130, indexes conversion history of an economic value for carbon credit determined in real time from an economic value information DB 141, and converts the carbon emission reductions so as to be consistent with the conversion history of the economic value, thus producing carbon credit.

As such, the economic value information DB 141 receives the conversion history of the economic value for carbon credit in real time from a carbon credit certificate authority server and stores and manages the data. The economic value is determined based on the cost (12.03 euro (19,000 won) per ton in January 2010) that is charged to the country or company in 1 ton of carbon emissions, and the economic value is calculated and established based on the actual transaction price varying in real time, and is determined in the same manner even upon reduction of 1 ton of carbon emissions and thus may vary depending on the current price.

Furthermore, the carbon credit conversion module 140 produces carbon credit so as to correspond to the preset oil company information or additional oil company information authorized from the fuel information management module 110, and produces carbon credit so as to correspond to the preset credit card company information or additional credit card company information authorized from the fuel information management module 110.

That is, whether the carbon credit is produced by feeding the fuel from any oil company, and whether the carbon credit is produced by paying the fed fuel using any credit card company may be identified.

The carbon credit authentication module 150 transmits user identification data, vehicle identification data and carbon credit authentication request information, which are input by a user, to the carbon credit management server 200, along with the carbon credit and the carbon reductions authorized from the carbon credit conversion module 140, and receives carbon credit authentication information from the carbon credit management server 200 and stores and manages the information.

The carbon credit trading module 160 transmits user identification data, vehicle identification data, user account data and carbon credit trading request information, which are input by a user, to the carbon credit management server 200, along with the carbon credit, and checks whether a carbon credit trading price is added via inquiry of the preset user account data.

The carbon credit trading request information includes any one selected from among trading quantity data, trading price data, trading agency data and trading company data, regarding the carbon credit to be traded by the user.

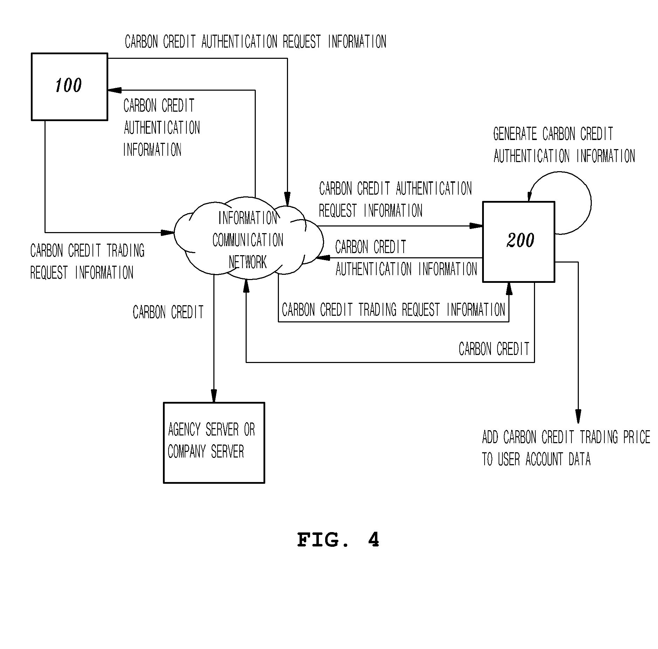

With reference to FIGS. 2 and 4, the carbon credit management server 200 of the system S for converting greenhouse gas emissions into carbon credit according to the present invention is described below.

The carbon credit management server 200 receives the user identification data, vehicle identification data, carbon credit authentication request information, carbon credit and carbon reductions from the carbon emission reduction device 100 connected via an information communication network, wherein when those thus received correspond to user identification data and vehicle identification data indexed from a carbon credit management DB 210, carbon credit authentication information is generated and transmitted to the carbon emission reduction device 100.

The carbon credit authentication information is preferably understood to be information which establishes the economic value included in carbon credit produced by the carbon credit conversion module 140 by determining a real-time conversion price compensating for reduction of 1 ton of carbon emissions so as to correspond to the carbon reductions based on the user identification data, vehicle identification data and carbon reductions included in the carbon credit authentication request information.

The carbon credit management server 200 receives the user identification data, vehicle identification data, user account data, carbon credit trading request information and carbon credit from the carbon emission reduction device 100 connected via the information communication network, transmits the carbon credit to the agency server or company server corresponding to the trading agency data or trading company data included in the carbon credit trading request information to trade the carbon credit, and adds the carbon credit trading price to the user account data.

Moreover, the carbon credit management server 200 is configured such that the carbon credit is transmitted to the agency server or company server corresponding to the trading agency data or trading company data included in the carbon credit trading request information so as to be traded, after which service information consistent with the carbon credit trading may be transmitted to the carbon emission reduction device 100.

As such, the service information is preferably understood to be information which provides any one selected from among refueling gifts corresponding to carbon credit trading price, vehicle insurance discounts corresponding to carbon credit trading price, vehicle tax discounts corresponding to carbon credit trading price, and tax cuts corresponding to carbon credit trading price. Furthermore, the service information is not limited to the foregoing, and may be understood to provide any service corresponding to the carbon credit trading price in consultation with the government or company.

The carbon credit management server 200 according to the present invention may include a wireless terminal with an application that provides authentication or trading of carbon credit, and may be configured such that results of authentication or trading of carbon credit are changed into the form of SMS (Short Message Service), which is then transmitted to the mobile terminal of a user.

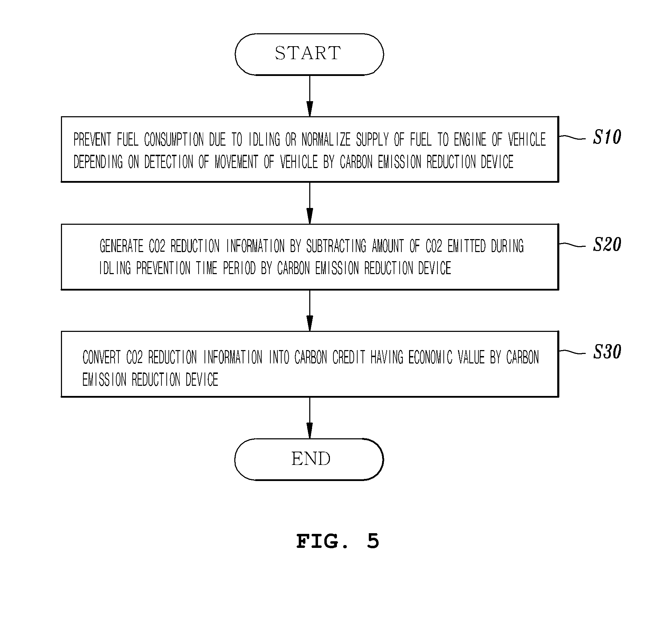

On the other hand, with reference to FIG. 5, a method of converting greenhouse gas emissions into carbon credit according to the present invention is described below.

By the carbon emission reduction device 100, the supply of fuel to the engine of a vehicle is minimized to prevent fuel consumption due to idling when the vehicle does not move within a preset time period, and the supply of fuel to the engine of the vehicle is normalized when the vehicle is moved depending on the detection of the acceleration pedal of the vehicle (S10).

Subsequently, by the carbon emission reduction device 100, carbon dioxide reduction information is generated by adding or subtracting the amount of carbon dioxide whose emission is suppressed during an idling prevention time period to or from the amount of carbon dioxide emitted from the vehicle (S20).

By the carbon emission reduction device 100, the carbon dioxide reduction information is converted into carbon credit having an economic value generated upon reduction of 1 ton of carbon emissions (S30).

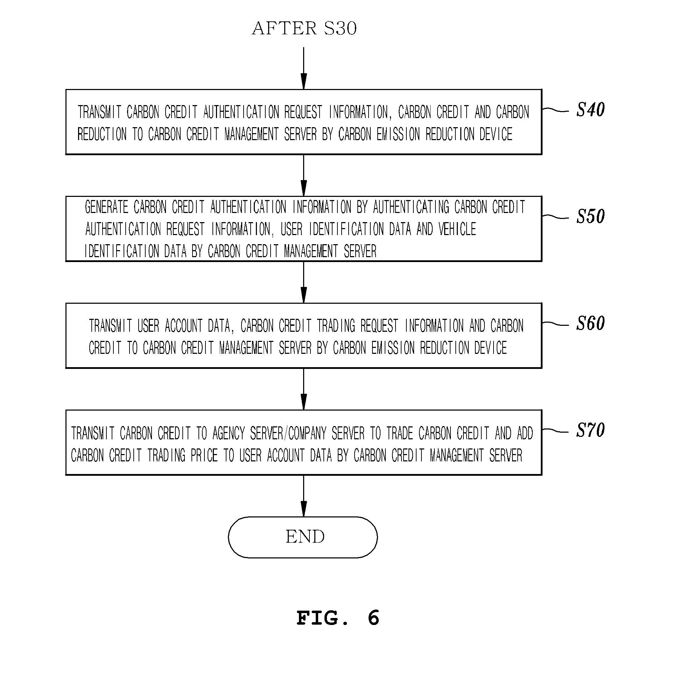

Specifically, with reference to FIG. 6, the steps after S30 in the method of converting greenhouse gas emissions into carbon credit according to the present invention are described below.

After S30, by the carbon emission reduction device 100, user identification data, vehicle identification data, carbon credit authentication request information, carbon credit and carbon reductions, which are input by a user, are transmitted to a carbon credit management server 200 (S40).

Subsequently, in the case where the user identification data, vehicle identification data, carbon credit authentication request information, carbon credit and carbon reductions, which are transmitted to the carbon credit management server 200, correspond to the user identification data and vehicle identification data indexed from a carbon credit management DB 210, carbon credit authentication information is generated and transmitted to the carbon emission reduction device 100 (S50).

Subsequently, the user identification data, vehicle identification data, user account data, carbon credit trading request information and carbon credit, which are input by the user, are transmitted to the carbon credit management server 200, by the carbon emission reduction device 100 (S60).

By the carbon credit management server 200, the carbon credit is transmitted to the agency server or company server corresponding to the trading agency data or trading company data included in the carbon credit trading request information so as to be traded, and a carbon credit trading price is added to the user account data or service information consistent with carbon credit trading is transmitted to the carbon emission reduction device 100 (S70).

As mentioned above, the service information is preferably understood to provide any service corresponding to the carbon credit trading price in consultation with the government or company.

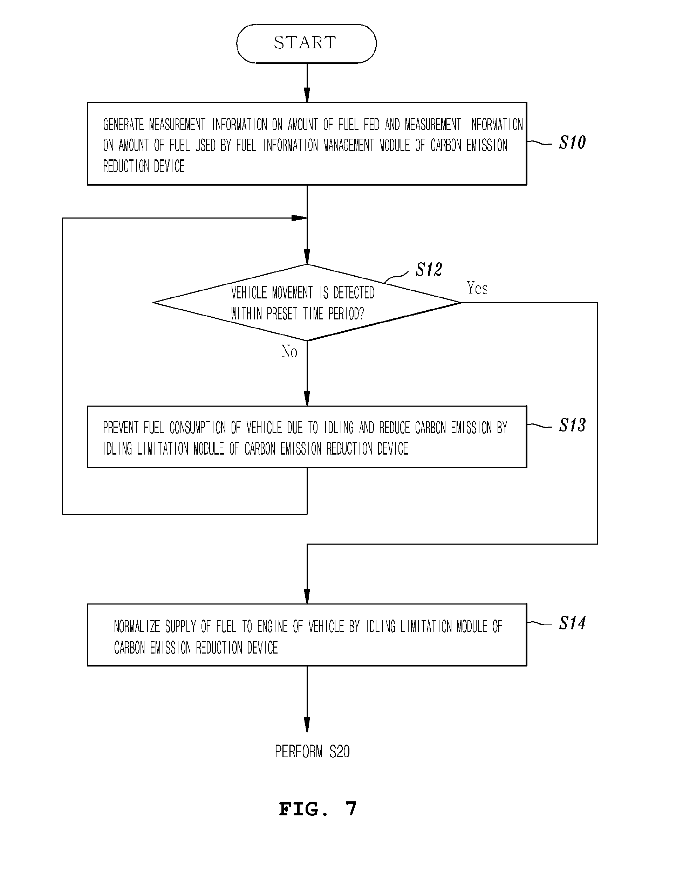

Meanwhile, with reference to FIG. 7, S10 in the method of converting greenhouse gas emissions into carbon credit according to the present invention is specified below.

By the fuel information management module 110 of the carbon emission reduction device 100, the kind and amount of fuel fed into the vehicle are detected to generate measurement information on an amount of fuel fed, and the amount of fuel consumed by the movement of the vehicle is detected to generate measurement information on an amount of fuel used, and such information is stored and managed (S11).

Subsequently, whether there is movement of the vehicle within a preset time period is determined depending on the detection of the acceleration pedal of the vehicle, by the idling limitation module 120 of the carbon emission reduction device 100 (S12).

As the determination result of S12, when the movement of the vehicle is not detected within the preset time period, the supply of fuel to the engine of the vehicle is minimized by the idling limitation module 120 of the carbon emission reduction device 100, thus preventing fuel consumption due to idling and suppressing carbon emission (S13).

As the determination result of S12, when the movement of the vehicle is detected within the present time period, the supply of fuel to the engine of the vehicle is normalized by the idling limitation module 120 of the carbon emission reduction device 100 (S14).

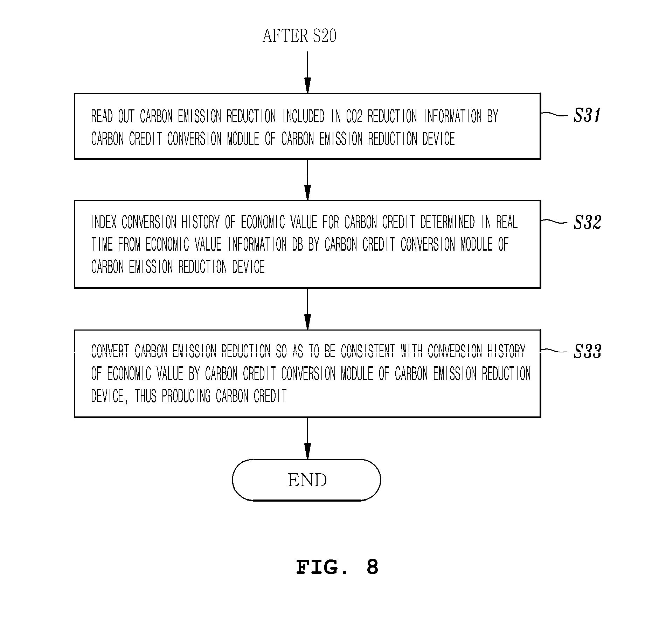

Particularly, with reference to FIG. 8, S30 in the method of converting greenhouse gas emissions into carbon credit according to the present invention is specified below.

The carbon emission reductions included in the carbon dioxide reduction information are read out by the carbon credit conversion module 140 of the carbon emission reduction device 100 (S31).

Subsequently, the conversion history of the economic value for carbon credit that is determined in real time from the economic value information DB 141 is indexed by the carbon credit conversion module 140 of the carbon emission reduction device 100 (S32).

Further, the carbon emission reductions are converted so as to be consistent with the conversion history of the economic value by the carbon credit conversion module 140 of the carbon emission reduction device 100, thus producing carbon credit (S33).

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A system for converting greenhouse gas emissions into carbon credit, comprising:
a carbon emission reduction device (100) for detecting an amount of fuel fed into a vehicle and an amount of fuel used by the vehicle, minimizing supply of fuel to an engine of the vehicle to prevent fuel consumption due to idling and suppress carbon emission when the vehicle does not move within a preset time period, normalizing supply of fuel to the engine of the vehicle when the vehicle is moved depending on detection of an acceleration pedal of the vehicle, generating carbon dioxide reduction information by adding or subtracting an amount of carbon dioxide whose emission is suppressed during an idling prevention time period to or from an amount of carbon dioxide emitted from the vehicle, and converting the carbon dioxide reduction information into carbon credit which has an economic value generated upon reduction of 1 ton of carbon emissions.

2. The system of claim 1, wherein the carbon emission reduction device comprises:
an idling limitation module (120) for minimizing supply of fuel to an engine of a vehicle to prevent fuel consumption due to idling and suppress carbon emission when the vehicle does not move within a preset time period depending on detection of an acceleration pedal of the vehicle, and normalizing supply of fuel to the engine of the vehicle when the vehicle is moved depending on detection of the acceleration pedal of the vehicle;
a carbon dioxide reduction calculation module (130) for generating carbon dioxide reduction information by adding or subtracting an amount of carbon dioxide whose emission is suppressed during an idling prevention time period by operation of the idling limitation module to or from an amount of carbon dioxide emitted from the vehicle; and
a carbon credit conversion module (140) for reading out carbon emission reductions included in the carbon dioxide reduction information, indexing conversion history of an economic value for carbon credit determined in real time from an economic value information DB, and converting the carbon emission reductions so as to be consistent with the conversion history of the economic value to produce carbon credit.

3. The system of claim 1, wherein the carbon emission reduction device further comprises:
a fuel information management module (110) for detecting a kind and amount of fuel fed into a vehicle to generate measurement information on an amount of fuel fed, detecting an amount of fuel consumed by movement of the vehicle to generate measurement information on an amount of fuel used, and storing and managing the information, wherein the fuel information management module receives preset oil company information and additional oil company information upon supply of fuel to the vehicle and stores and manages the information, and receives preset credit card company information and additional credit card company information upon payment of fuel fed into the vehicle and stores and manages the information.

4. The system of claim 3, wherein the measurement information on the amount of fuel fed includes vehicle model data, fuel model data, vehicle travel time data, and data for an amount of fuel fed into a fuel storage space of a vehicle.

5. The system of claim 1, wherein the carbon emission reduction device enables any one selected from among preset oil company information, additional oil company information, preset credit card company information and additional credit card company information to be included in the carbon credit upon detection of the amount of fuel fed into the vehicle and the amount of fuel used by the vehicle, thus identifying whether the carbon credit is produced by feeding the fuel from any oil company and whether the carbon credit is produced by paying the fed fuel using any credit card company.

6. The system of claim 1, wherein the carbon emission reduction device further comprises:
a carbon credit authentication module (150) for transmitting user identification data, vehicle identification data and carbon credit authentication request information, which are input by a user, to a carbon credit management server, along with the carbon credit and the carbon reductions, and receiving carbon credit authentication information from the carbon credit management server and storing and managing the information.

7. The system of claim 1, wherein the carbon emission reduction device further comprises:
a carbon credit trading module (160) for transmitting user identification data, vehicle identification data, user account data and carbon credit trading request information, which are input by a user, to a carbon credit management server (200), along with the carbon credit, and checking whether a carbon credit trading price is added via inquiry of preset user account data.

8. The system of claim 7, wherein the carbon credit trading request information includes any one selected from among trading quantity data, trading price data, trading agency data and trading company data, regarding the carbon credit to be traded by the user.

9. The system of claim 1, comprising:
a carbon credit management server (200) for receiving user identification data, vehicle identification data, carbon credit authentication request information, carbon credit and carbon reductions from the carbon emission reduction device connected via an information communication network, wherein when those thus received correspond to user identification data and vehicle identification data indexed from a carbon credit management DB, carbon credit authentication information is generated and transmitted to the carbon emission reduction device.

10. The system of claim 9, wherein the carbon credit authentication information is information which establishes an economic value included in the carbon credit by determining a real-time conversion price compensating for reduction of 1 ton of carbon emissions so as to correspond to the carbon reductions based on the user identification data, vehicle identification data and carbon reductions included in the carbon credit authentication request information.

11. The system of claim 1, comprising:
a carbon credit management server (200) for receiving user identification data, vehicle identification data, user account data, carbon credit trading request information and carbon credit from the carbon emission reduction device, transmitting the carbon credit to an agency server or a company server corresponding to trading agency data or trading company data included in the carbon credit trading request information to trade the carbon credit, and adding a carbon credit trading price to the user account data.

12. A method of converting greenhouse gas emissions into carbon credit, comprising:
(a) minimizing supply of fuel to an engine of a vehicle to prevent fuel consumption due to idling and suppress carbon emission when the vehicle does not move within a preset time period and normalizing supply of fuel to the engine of the vehicle when the vehicle is moved depending on detection of an acceleration pedal of the vehicle, by a carbon emission reduction device (100);
(b) generating carbon dioxide reduction information by adding or subtracting an amount of carbon dioxide whose emission is suppressed during an idling prevention time period to or from an amount of carbon dioxide emitted from the vehicle, by the carbon emission reduction device; and
(c) converting the carbon dioxide reduction information into carbon credit having an economic value generated upon reduction of 1 ton of carbon emissions, by the carbon emission reduction device.

13. The method of claim 12, comprising, after (c):
(d) transmitting user identification data, vehicle identification data, carbon credit authentication request information, carbon credit and carbon reductions, which are input by a user, to a carbon credit management server (200), by the carbon emission reduction device;
(e) generating carbon credit authentication information when the user identification data, vehicle identification data, carbon credit authentication request information, carbon credit and carbon reductions, which are transmitted to the carbon credit management server, correspond to user identification data and vehicle identification data indexed from a carbon credit management DB (210), and transmitting the carbon credit authentication information to the carbon emission reduction device;
(f) transmitting user identification data, vehicle identification data, user account data, carbon credit trading request information and carbon credit, which are input by a user, to the carbon credit management server, by the carbon credit management server; and
(g) transmitting the carbon credit to an agency server or a company server corresponding to trading agency data or trading company data included in the carbon credit trading request information to trade the carbon credit, and adding a carbon credit trading price to the user account data, by the carbon credit management server.

14. The method of claim 12, wherein (a) comprises:
(a-1) detecting a kind and amount of fuel fed into a vehicle to generate measurement information on an amount of fuel fed, detecting an amount of fuel consumed by movement of the vehicle to generate measurement information on an amount of fuel used, and storing and managing the information, by an fuel information management module (110) of the carbon emission reduction device;
(a-2) determining whether the vehicle is moved or not within a preset time period depending on detection of the acceleration pedal of the vehicle, by an idling limitation module (120) of the carbon emission reduction device;
(a-3) minimizing supply of fuel to the engine of the vehicle to prevent fuel consumption due to idling and suppress carbon emission by the idling limitation module of the carbon emission reduction device when movement of the vehicle is not detected within the preset time period, as a determination result of (a-2); and
(a-4) normalizing supply of fuel to the engine of the vehicle by the idling limitation module of the carbon emission reduction device when the movement of the vehicle is detected within the preset time period, as a determination result of (a-2).

15. The method of claim 12, wherein (c) comprises:
(c-1) reading out carbon emission reductions included in the carbon dioxide reduction information, by a carbon credit conversion module (140) of the carbon emission reduction device;
(c-2) indexing conversion history of an economic value for carbon credit determined in real time from an economic value information DB, by the carbon credit conversion module of the carbon emission reduction device; and
(c-3) converting the carbon emission reductions so as to be consistent with the conversion history of the economic value, by the carbon credit conversion module of the carbon emission reduction device, thus producing carbon credit.
